# EUROPÄISCHE PATENTSCHRIFT

(11) **EP 3 077 765 B1**
(45) Veröffentlichungstag und Bekanntmachung des Hinweises auf die Patenterteilung: **26.09.2018**
(21) Anmeldenummer: 14812719.4
(22) Anmeldetag: 04.12.2014
(51) Int. Cl.: G01B 21/04

(54) **VERFAHREN ZUM AUSLESEN EINES ZWEIDIMENSIONALEN CODES MITTELS EINER KAMERA ZUR DREIDIMENSIONALEN OPTISCHEN VERMESSUNG VON OBJEKTEN**
METHOD FOR READING A TWO-DIMENSIONAL CODE BY MEANS OF A CAMERA USED FOR THREE-DIMENSIONAL OPTICAL MEASUREMENT OF OBJECTS
PROCÉDÉ DE LECTURE D'UN CODE À DEUX DIMENSIONS AU MOYEN D'UNE CAMÉRA POUR LA MESURE OPTIQUE EN TROIS DIMENSIONS D'OBJETS

(30) Priorität: 04.12.2013 DE 102013224930
(43) Veröffentlichungstag der Anmeldung: 12.10.2016
(73) Patentinhaber: Sirona Dental Systems GmbH, 64625 Bensheim (DE)
(72) Erfinder: POPILKA, Björn, 69502 Hemsbach (DE); KOCHERSCHEIDT, Gerrit, 69190 Walldorf (DE)
(74) Vertreter: Sommer, Peter
(86) Internationale Anmeldenummer: PCT/EP2014/076486
(87) Internationale Veröffentlichungsnummer: WO 2015/082580

(56) Entgegenhaltungen:
- EP-A1- 2 645 301
- WO-A2-00/27131
- DE-A1-102009 030 644

## Beschreibung

### Technisches Gebiet

Die Erfindung betrifft ein Verfahren zum Auslesen eines zweidimensionalen Codes mittels einer Kamera zur dreidimensionalen optischen Vermessung eines Objekts mittels Triangulation.

### Stand der Technik

Kameras zur dreidimensionalen Vermessung von Objekten mittels Triangulation, wie sie beispielsweise zur Vermessung von Zähnen oder Fehlstellen in der Zahnmedizin eingesetzt werden, müssen vor einer ersten Nutzung oder auch regelmäßig kalibriert werden. Hierzu werden beispielsweise Kalibrier-Sets verwendet, die einen Träger umfassen, auf dem Marker in genau bekannten Positionen angeordnet sind. Zur Kalibrierung kann dieses Kalibriertarget, also der Träger mit den Markern, in unterschiedlichen Lagen relativ zur Kamera positioniert und aufgenommen werden. Anhand der Aufnahme und der genau bekannten Positionen der Marker auf dem Träger bzw. zueinander wird die Kalibrierung der Kamera vorgenommen.

Da die Positionen der Marker auf dem Träger produktionsbedingt etwas schwanken können und dadurch die Positionen der Marker nicht ausreichend genau bekannt sind, um eine korrekte Kalibrierung durchführen zu können, werden die Kalibrier-Sets üblicherweise, bevor sie verwendet werden könne, jeweils genau vermessen und die Ergebnisse in einer Datenbank abgelegt.

Wird ein Kalibrier-Set zum Kalibrieren einer Kamera herangezogen, so können die genauen Positionen der Marker vorab beispielsweise anhand einer Seriennummer des Kalibrier-Sets in der Datenbank nachgesehen werden.

Das Ablesen, Eingeben oder Suchen der Seriennummer oder einer anderen Kenntlichmachung/Codierung in der Datenbank stellt jedoch eine Fehlerquelle dar.

Um ein Kalibrier-Set zuverlässig und eindeutig zu identifizieren ist aus der WO 00/27131 bekannt, einen zur Identifikation an dem Kalibrierset angeordneten Barcode mittels der Kameras des zu Kalibrierenden Kamerasystems aufzunehmen und auszulesen.

Aus der DE 10 2009 030 644 A1 ist bekannt, kodierte Kalibriermarken einzusetzen, die einerseits optische Strukturen für die Kalibrierung darstellen, andererseits kodierte Informationen hinsichtlich ihrer Position enthalten.

Die Aufgabe der vorliegenden Erfindung ist es, diese Fehlerquelle zu vermeiden und den Stand der Technik weiterzubilden.

### Offenbarung der Erfindung

Diese Aufgabe wird durch ein Verfahren zum Auslesen eines zweidimensionalen Codes mittels einer Kamera zur dreidimensionalen optischen Vermessung eines Objekts mittels Triangulation gelöst. Das Verfahren, das in dem unabhängigen Anspruch 1 definiert wird, umfasst die folgenden Verfahrensschritte: Die Kamera wird über dem zweidimensionalen Code positioniert. Der Code wird mittels einer Weißlichtquelle der Kamera beleuchtet. Mittels der Kamera wird ein Bild des Codes aufgenommen und der Code wird in dem Bild mittels einer Recheneinheit erkannt bzw. ausgelesen. Der Code ist an einem Kalibrier-Set für die Kamera angeordnet und die im Code verschlüsselten Daten sind entweder direkt Kalibrierdaten der Kamera oder eine Codenummer, anhand derer Kalibrierdaten der Kamera in einer Datenbank ermittelt werden. Zum Positionieren über dem Code wird die Kamera zumindest teilweise in eine Öffnung oder eine Vertiefung des Kalibrier-Sets eingebracht.

Kameras zur dreidimensionalen optischen Vermessung eines Objekts mittels Triangulation basieren auf dem Abtasten des Objekts mit Licht, wobei ein Beleuchtungsstrahlengang und ein Beobachtungsstrahlengang einen Winkel einschließen. Die Vermessung bzw. Abtastung kann punktweise oder auch flächig erfolgen. Eine spezielle Form der Triangulation ist beispielsweise das Phasenschiebeverfahren, bei dem ein Muster, beispielsweise ein Streifenmuster, in verschiedenen Positionen bzw. Phasenlagen auf ein Objekt projiziert und aufgenommen wird, um ein Höhenprofil des Objekts zu ermitteln. Um die erhaltenen Höhenprofile bzw. 3D-Daten farbecht und/oder mit naturgetreuer Textur darstellen zu können, wird häufig zusätzlich mindestens ein Bild des Objekts aufgenommen, bei dem kein Muster auf das Objekt projiziert wird, wobei das Objekt mit einer Weißlichtquelle, beispielsweise einer Weißlicht-LED, beleuchtet wird. Da häufig monochromatisches Licht für die Triangulation verwendet wird, weisen Kameras in solchen Fälle häufig zusätzlich mindestens eine Weißlichtquellen auf.

Beim erfindungsgemäßen Auslesen wird die Kamera quasi als Fotoapparat verwendet, um aus einer Aufnahme des Codes den Inhalt bzw. die verschlüsselten Daten des Codes zu ermitteln. Dadurch kann beispielsweise das Ablesen einer Seriennummer sowie das Eingeben dieser in eine Recheneinheit oder das Durchsuchen einer Datenbank durch einen Anwender vermieden werden.

Der Code kann beispielsweise ein Matrix-Code sein, z.B. ein QR-Code (Quick Response Code), der aus einer quadratischen Matrix aus beispielsweise schwarzen und weißen Punkten besteht und die kodierten Daten beispielsweise binär darstellt. Der Code kann natürlich auch in anderen Farben bzw. Farbkombinationen dargestellt sein.

Es kann auch jede andere Form eines zweidimensionalen Codes verwendet werden, beispielsweise ein Strichcode oder auch ein Punktcode.

Genauso könnte der Code beispielsweise eine Seriennummer sein, die mittels der Kamera aufgenommen und mittels einer Texterkennungssoftware, z.B. OCR, erkannt wird.

Der Code kann entweder direkt bestimmte Daten bzw. Informationen, z.B. Kalibrierdaten, enthalten oder eine Codenummer, beispielsweise eine Seriennummer, wiedergeben unter der bestimmte Informationen bzw. Daten in einer Datenbank hinterlegt sind. Dies richtet sich auch nach der Größe des Codes und der Größe des Aufnahmebereichs der Kamera.

Zur Kalibrierung von auf Triangulation beruhenden Kameras werden häufig Kalibier-Sets verwendet, die typischerweise einen inneren Kalibriertubus, ein äußeren Kalibriertubus, sowie einen Kalibrierdeckel aufweisen, wobei ein Kalibrieretikett beispielsweise auf einer oberen Seite des inneren

Kalibriertubus angeordnet ist. Der äußere Kalibriertubus weist im oberen Bereich typischerweise seitlich eine Öffnung auf durch die eine Kamera in den äußeren Kalibriertubus zumindest teilweise eingebringbar ist und so über dem am inneren Kalibriertubus angeordneten Kalibrieretikett angeordnet werden kann, dass das Kalibrieretikett mittels der Kamera aufgenommen werden kann. Typischweise befindet sich weiterhin im Kalibrierdecke eine Vertiefung, in welche die Kamera für die Austrittsfensterkalibrierung zumindest teilweise einbringbar ist.

Der zweidimensionale Code kann an unterschiedlichen Positionen am Kalibrier-Set angeordnet sein. Gemäß anderer Verfahren kann der Code an einer äußeren Wand des Kalibrier-Sets angeordnet sein. Dann muss die Kamera während einer Aufnahme des Codes beispielsweise freihändig über dem Code gehalten werden. Der Code kann aber auch beispielsweise unterhalb des Kalibrieretiketts angeordnet sein. Hierdurch wird die Position der Kamera während der Aufnahme des Codes durch die Öffnung im äußeren Kalibriertubus unterstützt oder sichergestellt. Allerdings ist dies nur möglich, wenn neben dem Kalibrieretikett noch ausreichend Platz für den Code ist und sichergestellt werden kann, dass die Kamera diesen in der in die Öffnung eingebrachten Position aufnehmen kann. Der Code kann auch an einer Wand der Vertiefung im Kalibrierdeckel angeordnet sein, wobei die Position der Kamera in diesem Fall während einer Aufnahme des Codes durch die Vertiefung im Kalibrierdeckel zumindest unterstützt oder sogar sichergestellt werden kann.

Wird der Code an einer inneren Wand des Kalibrier-Sets angeordnet, an die die Kamera durch Einführen in eine Öffnung oder Vertiefung des Kalibrier-Sets herangebracht werden kann, so wird das Aufnehmen des Codes mittels der Kamera erleichtert. Je nach Ausgestaltung der Öffnung kann durch Führen des Teils der Kamera, der in die Öffnung eingebracht wird, die genaue Positionierung der Kamera über dem Code und eine ruhige Position der Kamera während einer Aufnahme sichergestellt werden.

Ob der Code direkt die Kalibrierdaten enthält oder eine Codenummer wiedergibt, kann beispielsweise von der Größe des Codes abhängen, wobei die mögliche Größe des Codes wiederum von der Position des Codes auf dem Kalibrier-Set sowie von der Größe eines Aufnahmebereichs der Kamera abhängt.

Vorteilhafterweise ist der Code ein binärer Code. Binäre Codes stellen eine typische Gruppe zweidimensionaler Codes dar. Der Code kann beispielsweise ein Matrix-Code, z.B. ein QR-Code, oder ein Strichcode sein.

Vorteilhafterweise wird während eines Aufnahmezeitintervalls zeitlich abwechselnd ein Muster auf den Code projiziert oder dieser mit der Weißlichtquelle beleuchtet und jeweils ein Bild aufgenommen, wobei zum Auslesen des Codes nur Bilder des mit der Weißlichtquelle beleuchteten Objekts herangezogen werden.

Häufig verfügen Kameras zur dreidimensionalen Vermessung von Objekten mittels Triangulation über einen Aufnahmemodus, der ein abwechselndes Durchführen von Triangulationsaufnahmen mit projiziertem Muster und Weißlichtaufnahmen ohne Muster, also quasi fotographische Aufnahmen, vorsieht. Dieser Aufnahmemodus ermöglicht es farbechte 3D-Aufnahmen von Objekten zu erzeugen.

Durch das selektive Verwenden lediglich der Aufnahmen, bei denen das Objekt mit Weißlicht beleuchtet und kein Muster projiziert wird, kann dieser übliche Aufnahmemodus auch zum Auslesen des Codes verwendet werden.

Vorteilhafterweise werden gleichzeitig oder zeitlich nacheinander mindestens ein erstes und ein zweites Bild des mit Weißlicht beleuchteten Codes aufgenommen, wobei für das erste Bild nur Licht einer ersten Wellenlänge oder eines ersten Wellenlängenbereichs und für das zweite Bild nur Licht einer zweiten Wellenlänge oder eines zweiten Wellenlängenbereichs detektiert wird.

Das selektive Detektieren von verschiedenen Wellenlängen ermöglicht es, einen Code auszulesen, der mehrere Kodierungen in verschiedenen Farben umfasst bzw. beinhaltet. Ein solcher Code kann beispielsweise aus einem ersten zweidimensionalen binären Code, der beispielsweise in roter Farbe wiedergegeben ist, aus einem zweiten zweidimensionalen binären Code in grüner Darstellung und einem dritten zweidimensionalen binären Code in blauer Darstellung bestehen, wobei der erste, zweite und dritte Code örtlich übereinander angeordnet werden. Ein solcher Code kann entsprechend deutlich mehr Information pro Fläche beinhalten bzw. wiedergeben.

Je nach Art des Sensors der Kamera kann das Detektieren der unterschiedlichen Codes nacheinander oder gleichzeitig durchgeführt werden. Beispielsweise können drei Codes, die in drei unterschiedlichen Farben dargestellt sind, mittels dreier Sensoren für eben diese drei unterschiedlichen Farben gleichzeitig ausgelesen werden.

Gemäß anderer Verfahren wird die Kamera zum Positionieren über dem Code in einer Position in einem Abstand an eine äußere Wand des Kalibrier-Sets herangeführt, eine Anordnung des Codes ist an einer äußeren Wand des Kalibrier-Sets einfach möglich ist. Um den Code auszulesen kann dann die Kamera einfach in diesem Bereich an die Wand des Kalibrier-Sets herangeführt werden. Hierbei sollte die Größe des Codes eher klein gewählt werden, damit es möglichst einfach ist, mit einer Aufnahme den gesamten Code zu detektieren.

### Kurze Beschreibung der Zeichnungen

Das erfindungsgemäße Verfahren wird anhand der Zeichnung erläutert. Es zeigen:
- Fig. 1: eine Kamera sowie ein Kalibrier-Set;
- Fig. 2: ein Kalibrier-Set;
- Fig. 3: ein Positionieren der Kamera;
- Fig. 4: ein Auslesen eines Codes;

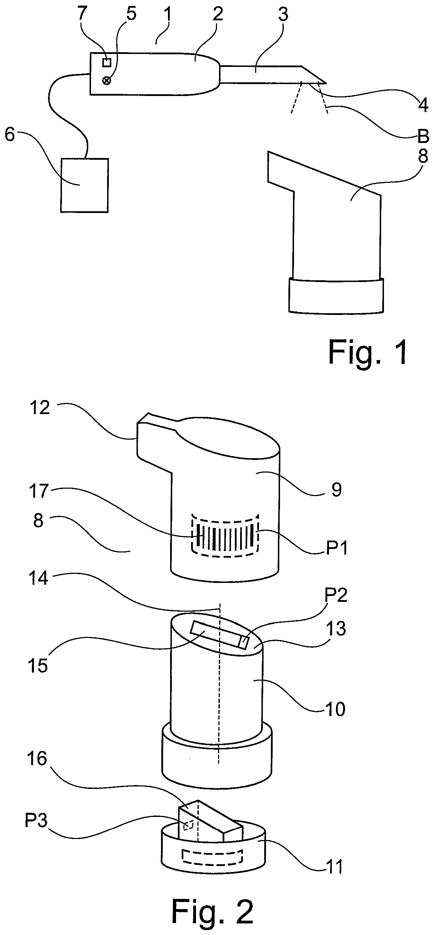

In Fig. 1 ist eine Kamera 1 zur dreidimensionalen optischen Vermessung eines Objekts mittels Triangulation skizzenhaft dargestellt. Die Kamera 1 besteht aus einem Griffteil 2 und einem Kopfteil 3, an dessen Ende ein Austrittsfenster 4 angeordnet ist. Durch das Austrittsfenster 4 kann ein Beleuchtungsstrahl austreten, weiterhin kann Licht, welches von einem Objekt zurückgestrahlt wird als Beobachtungsstrahl wieder in die Kamera eintreten und von dieser detektiert werden.

Die Kamera 1 weist zumindest eine Weißlichtquelle 5, beispielsweise eine Weißlicht-LED, auf und ist wireless oder über ein Kabel mindestens an eine Recheneinheit 6 angeschlossen, wobei ein in der Kamera 1 angeordneter Detektor 7 detektierte Daten an die Recheneinheit 6 überträgt. Zum Kalibrieren der Kamera 1 kann ein Kalibrier-Set 8 verwendet werden, welches ebenfalls skizzenhaft in Fig. 1 dargestellt ist.

Der Aufbau des Kalibrier-Sets 8 ist in Fig. 2 dargestellt. Das Kalibrier-Set 8 weist einen äußeren Kalibriertubus 9, einen inneren Kalibriertubus 10 sowie einen Kalibrierdeckel 11 auf.

Der äußere Kalibriertubus 9 weist eine Öffnung 12 auf, in die der Kamerakopf 3 einbringbar ist. Die Öffnung 12 kann beispielsweise in Breite und Höhe im Wesentlichen dem Umfang des Kamerakopfs 3 entsprechen und eine Tiefe aufweisen, so dass ein eingeführter Kamerakopf 3 von der Öffnung 12 gehalten oder zumindest etwas unterstütz wird.

Der innere Kalibriertubus 10 weist eine Deckfläche 13 auf, die beispielsweise wie in Fig. 2 dargestellt hinsichtlich einer Längsachse 14 des inneren Kalibriertubus 10 schräg ausgerichtet sein kann. Auf der Deckfläche 13 ist ein Kalibrieretikett 15 angeordnet.

Der Kalibrierdeckel 11 weist eine Vertiefung 16 auf, die in einem zusammengesetzten Zustand des Kalibrier-Sets 8 in den inneren Kalibriertubus 10 hineinreicht. Die Vertiefung 16 hat beispielsweise im Wesentlichen eine Negativform des Kamerakopfs 3, so dass dieser in die Vertiefung 16 eingeführt werden kann.

Der Code 17 kann beispielsweise an einer der Fig. 2 dargestellten Positionen P1, P2 oder P3 an einer äußeren Wand des äußeren Kalibriertubus 9, an der Deckfläche 13 des inneren Kalibriertubus 10 oder an einer Fläche der Vertiefung 16 des Kalibrierdeckels 11 angeordnet sein.

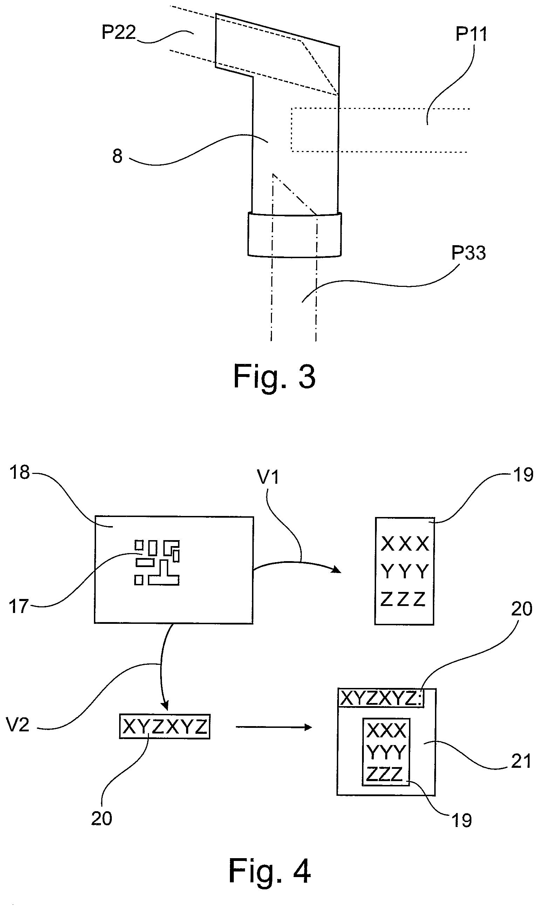

Erfindungsgemäß wird die Kamera 1 über dem an Position P2 oder P3 befindlichen Code 17 positioniert. Bekannt ist bei einer Anordnung des Codes 17, beispielsweise in Position P1 am Kalibrier-Set 8, den Kamerakopf 3 der Kamera 1 beispielsweise in der Position P 11 über die einer Seitenwand des Kalibrier-Sets 8 zu halten, wie es in Fig. 3 durch die gepunktete Darstellung des Kopfteils 3 der Kamera 1 skizziert ist. Ist der Code gemäß der Erfindung beispielsweise in Position P2 auf der Deckfläche 13 des inneren Kalibriertubus 10 angeordnet, so wird das Kopfteil 3 der Kamera 1 in die Position P 22 in der Öffnung 12 des äußeren Kalibriertubus 9 positioniert, wie in Fig. 3 gestrichelt dargestellt. Ist der Code 17 gemäß der Erfindung beispielsweise in Position P3, also in der Vertiefung 16 des Kalibrierdeckels 11 angeordnet, so wird der Kamerakopf 3 in die Position P 33 in die Vertiefung 16 des Kalibrierdeckels 11 eingeführt, wie in Fig. 1 strichpunktiert dargestellt.

Während die Kamera 1 erfindungsgemäß in der Position P22, P33 gehalten wird, in der sie über dem Code 17 positioniert wurde, wird der Code 17 mittels der Weißlichtquelle 5 der Kamera 1 beleuchtet, was in Fig. 1 gestrichelt angedeutet und mit B bezeichnet ist. Mittels des Detektors 7 wird ein Bild 18 des Codes 17 detektiert und an die Recheneinheit 6 übermittelt. Wie in Fig. 4 skizziert, wird das detektierte Bild 18 des Codes 17 mittels der Recheneinheit 6 ausgelesen, d.h. es werden die verschlüsselten Daten ermittelt. Gemäß der mit Pfeil V1 angedeuteten Variante entsprechen die ausgelesenen Daten direkt Kalibrierdaten 19 des Kalibrier-Sets 8. Gemäß der mit Pfeil V2 angedeuteten weiteren Variante entsprechen die ausgelesenen Daten einer Codenummer 20 bzw. einer Adresse in einer Datenbank 21. Dies kann auch die Seriennummer des Kalibrier-Sets 8 sein, unter der die Kalibrierdaten 19 in einer Datenbank 21 abgelegt werden. Die Kalibrierdaten 19 können dann mittels der Recheneinheit 6 oder einer weiteren Recheneinheit, an die die Codenummer 20 übermittelt wird, anhand der Codenummer 20 aus der Datenbank 21 ausgelesen werden.

### Bezugszeichen

- 1: Kamera
- 2: Griffteil
- 3: Kopfteil
- 4: Austrittsfenster
- 5: Weißlichtquelle
- 6: Recheneinheit
- 7: Detektor
- 8: Kalibrier-Set
- 9: äußeren Kalibriertubus
- 10: innerer Kalibriertubus
- 11: Kalibrierdeckel
- 12: Öffnung des äußeren Kalibriertubus 9
- 13: Deckfläche des inneren Kalibriertubus 10
- 14: Längsachse des inneren Kalibriertubus 10
- 15: Kalibrieretikett
- 16: Vertiefung des Kalibrierdeckels 11
- 17: Code
- 18: detektiertes Bild
- 19: Kalibrierdaten des Kalibrier-Sets 8
- 20: Codenummer
- 21: Datenbank
- B: Beleuchten
- P1: Positionen des Codes 17
- P2: Positionen des Codes 17
- P3: Positionen des Codes 17
- P11: Positionierung des Kamerakopfs 3
- P22: Positionierung des Kamerakopfs 3
- P33: Positionierung des Kamerakopfs 3
- V1: Auslesevariante
- V2: Auslesevariante

## Patentansprüche

1. Verfahren zum Auslesen eines zweidimensionalen Codes (17) mittels einer Kamera (1) zur dreidimensionalen optischen Vermessung eines Objekts mittels Triangulation, wobei
- die Kamera (1) über dem zweidimensionalen Code (17) positioniert wird,
- der Code (17) mittels einer Weißlichtquelle (5) der Kamera (1) beleuchtet und mittels der Kamera (1) ein Bild (18) des Codes (17) aufgenommen wird und
- im Code (17) verschlüsselte Daten aus dem Bild (18) des Codes (17) mittels einer Recheneinheit (6) ausgelesen werden,
- der Code an einem Kalibrier-Set für die Kamera (1) angeordnet ist und wobei die im Code (17) verschlüsselten Daten entweder direkt Kalibrierdaten (19) der Kamera (1) oder eine Codenummer (20) sind, anhand derer Kalibrierdaten (19) der Kamera in einer Datenbank (20) ermittelt werden,
**dadurch gekennzeichnet, dass**
- die Kamera (1) zum Positionieren über dem Code (17) in eine Position (P22, P33) zumindest teilweise in eine Öffnung (12) oder Vertiefung (16) des Kalibrier-Sets (8) eingebracht wird.

2. Verfahren nach Anspruch 1, **dadurch gekennzeichnet, dass** der Code (17) ein binärer Code (17) ist.

3. Verfahren nach einem der Ansprüche 1 bis 2, **dadurch gekennzeichnet, dass** während eines Aufnahmezeitintervalls der Code (17) zeitlich abwechselnd mit einem Muster oder mit der Weißlichtquelle (5) beleuchtet wird und dass jeweils ein Bild (18) aufgenommen wird, wobei zum Auslesen des Codes (17) nur Bilder (18) des mit der Weißlichtquelle (5) beleuchteten Objekts herangezogen werden.

4. Verfahren nach einem der Ansprüche 1 bis 3, **dadurch gekennzeichnet, dass** gleichzeitig oder zeitlich nacheinander mindestens ein erstes und ein zweites Bild (18) des mit der Weißlichtquelle (5) beleuchteten Codes (17) aufgenommen werden, wobei für das erste Bild (18) nur Licht einer ersten Wellenlänge oder eines ersten Wellenlängenbereichs und für das zweite Bild (18) nur Licht einer zweiten Wellenlänge oder eines zweiten Wellenlängenbereichs detektiert wird.

## Claims

1. Method for reading a two-dimensional code (17) by means of a camera (1) for the three-dimensional optical measurement of an object by means of triangulation, wherein
- the camera (1) is positioned above the two-dimensional code (17),
- the code (17) is illuminated with the aid of a white light source (5) of the camera (1) and an image (18) of the code (17) is recorded by means of the camera (1), and
- data encoded in the code (17) is read from the image (18) of the code (17) by means of a computer unit (6),
- the code is disposed on a calibration set for the camera (1), and the data encoded in the code (17) is either directly calibration data (19) of the camera (1) or a code number (20), on the basis of which calibration data (19) of the camera are determined in a database (20), **characterized in that**,
- for positioning above the code (17), the camera (1) is brought into a position (P22, P33) at least partially in an opening (12) or recess (16) of the calibration set (8) .

2. Method according to Claim 1, **characterized in that** the code (17) is a binary code (17).

3. Method according to any one of Claims 1 to 2, **characterized in that**, over the course of a recording time interval, the code (17) is illuminated in a temporally alternating manner with a pattern or with the white light source (5) and that one image (18) is recorded each time, wherein, to read the code (17), only images (18) of the object illuminated with the white light source (5) are used.

4. Method according to any one of Claims 1 to 3, **characterized in that** at least one first image and one second image (18) of the code (17) illuminated with the white light source (5) are recorded simultaneously or successively, wherein only light of a first wavelength or a first wavelength range is detected for the first image (18) and only light of a second wavelength or a second wavelength range is detected for the second image (18).

## Revendications

1. Procédé de lecture d'un code bidimensionnel (17) au moyen d'une caméra (1) pour la mesure optique tridimensionnelle d'un objet par triangulation, dans lequel
- la caméra (1) est positionnée au-dessus du code bidimensionnel (17),
- le code (17) est éclairé au moyen d'une source de lumière blanche (5) de la caméra (1) et une image (18) du code (17) est prise au moyen de la caméra (1), et
- des données encodées dans le code (17) sont extraites de l'image (18) du code (17) au moyen d'une unité de calcul (6),
- le code est disposé au niveau d'un ensemble d'étalonnage destiné à la caméra (1), les données encodées dans le code (17) étant soit directement des données d'étalonnage (19) de la caméra (1), soit un numéro de code (20) au moyen duquel des données d'étalonnage (19) de la caméra sont déterminées dans une base de données (20), **caractérisé en ce que**
- la caméra (1) est amenée, en vue de son positionnement au-dessus du code (17), à une position (P22, P33) située au moins partiellement dans une ouverture (12) ou un renfoncement (16) de l'ensemble d'étalonnage (8).

2. Procédé selon la revendication 1, **caractérisé en ce que** le code (17) est un code binaire (17).

3. Procédé selon une des revendications 1 et 2, **caractérisé en ce que**, pendant un intervalle temporel de prise de vue, le code (17) est éclairé en alternance avec un motif ou avec la source de lumière blanche (5) et **en ce qu'**une image (18) respective est prise ; seules les images (18) de l'objet éclairé avec la lumière blanche (5) étant prises en compte pour la lecture du code (17).

4. Procédé selon une des revendications 1 à 3, **caractérisé en ce qu'**au moins une première et une deuxième image (18) du code (17) éclairé par la source de lumière blanche (5) sont prises simultanément ou consécutivement ; seule la lumière d'une première longueur d'onde ou d'une première plage de longueurs d'ondes étant détectée pour la première image (18), et seule la lumière d'une deuxième longueur d'onde ou d'une deuxième plage de longueurs d'ondes étant détectée pour la deuxième image (18).
